# EUROPÄISCHE PATENTSCHRIFT

(11) **EP 1 228 599 B1**
(45) Veröffentlichungstag und Bekanntmachung des Hinweises auf die Patenterteilung: **17.08.2005**
(21) Anmeldenummer: 00981163.9
(22) Anmeldetag: 07.11.2000
(51) Int. Cl.: H04L 12/26, H04L 12/24, H04Q 7/34

(54) **Verfahren und System zur hierarchischen Kommunikationsnetzverwaltung**
Method and system for hierarchical network management
Procédé et système pour la gestion d'un réseau hiérarchique

(30) Priorität: 09.11.1999 DE 19953877
(43) Veröffentlichungstag der Anmeldung: 07.08.2002
(73) Patentinhaber: SIEMENS AKTIENGESELLSCHAFT, 80333 München (DE)
(72) Erfinder: HIRSCH, Lucian, 81373 München (DE)
(86) Internationale Anmeldenummer: PCT/DE2000/003894
(87) Internationale Veröffentlichungsnummer: WO 2001/035576

(56) Entgegenhaltungen:
- EP-A- 0 810 755
- "INFORMATION TECHNOLOGY - OPEN SYSTEMS INTERCONNECTION - SYSTEMS MANAGEMENT: ALARM REPORTING FUNCTION. INTERNATIONAL STANDARD" INTERNATIONAL STANDARD ISO/IEC,XX,XX, 1992, Seiten FIRSTPAGE,II-IV,1-18, XP000869752 in der Anmeldung erwähnt
- ERICSSON: "Alarm IRP and GUI Launch IRP presentation" 3RD GENERATION WORKING GROUP, [Online] 20. - 22. Juli 1999, Seiten 1-18, XP002172243 Gefunden im Internet: <URL:http://www.3gpp.org/ftp/tsg_sa/WG5_TM /TSGS5_05/docs/s5-99134.pdf> [gefunden am 2001-07-17]

## Beschreibung

Die Erfindung betrifft ein Verfahren zum Verwalten eines Kommunikationsnetzes, insbesondere zum Erzeugen von Tests an einem übergeordneten Netzmanagementzentrum bzw. ein Kommunikationssystem zum Durchführen des Verfahrens.

In Funk-Kommunikationssystemen werden Informationen (beispielsweise Sprache, Bildinformationen, oder andere Daten) mit Hilfe von elektromagnetischen Wellen über eine Funkschnittstelle zwischen sendender und empfangender Funkstation (Basisstation bzw. Mobilstation) übertragen. Das Abstrahlen der elektromagnetischen Wellen erfolgt dabei mit Trägerfrequenzen, die in dem für das jeweilige System vorgesehenen Frequenzband liegen. Beim GSM (Global System for Mobile Communication) liegen die Trägerfrequenzen im Bereich von 900, 1800 bzw. 1900 MHz. Für zukünftige Mobilfunknetze mit CDMA- oder TD/CDMA-Übertragungsverfahren über die Funkschnittstelle, beispielsweise das UMTS (Universal Mobile Telecommunication System) oder andere Systeme der 3. Generation sind Frequenzen im Frequenzband von ca. 2000 MHz vorgesehen.

Die Prinzipien eines allgemeinen Managementnetzes, die auch als TMN-Prinzipien (TMN: Telecommunications Management Network) bezeichnet werden, definieren mehrere Managementebenen für das Management eines Kommunikationssystems - beispielsweise eines Mobil-Kommunikationssystems -, wobei jede Ebene eine doppelte Funktion hat. Im managenden System hat jede Ebene außer der untersten eine Managerfunktion für die darunterliegende Ebene. Im gemanagten System hat jede Ebene außer der obersten eine Agentenfunktion für die nächst höhere Ebene.

In einer objekt-orientierten Umgebung gibt es eine Vielzahl von Objekten, die Netzressources mit jeweils einer bestimmten Funktionalität darstellen. Bei der objekt-orientierten Umgebung, wie sie typischerweise zwischen Manager und Agent in einem Mobilfunknetz besteht, wird entsprechend jede Agent-Funktionalität von einem bestimmten Objekt bereitgestellt, das als gemanagtes Objekt (bzw. Objektinstanz MOI) einer Objektklasse verfügbar ist.

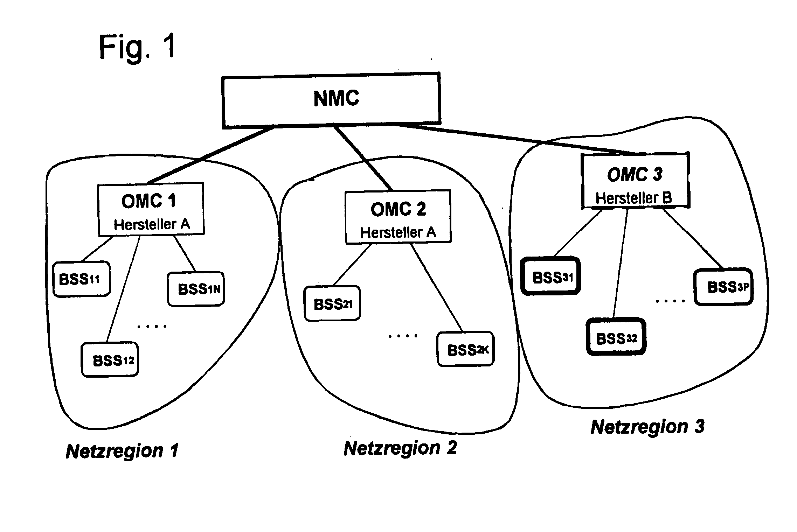

Das Objekt entsteht als Ergebnis einer Modellierungs-Tätigkeit, bei der neben der Funktionalität u.a. die Parameter und Rahmenbedingungen definiert werden, und ist sowohl dem Manager als auch dem ausführenden Agent an der entsprechenden Schnittstelle bekannt. Die Schnittstelle kann z.B. bei einem Mobilfunknetz die sogenannte O-Schnittstelle zwischen einem Betriebs- und Wartungszentrum (OMC in Fig. 1) und einem Basisstationssystem (BSS) sein.

Eine Objektinstanz einer bestimmten gemanagten Klasse A, die auch als managed object class bezeichnet wird, kann weitere Objektinstanzen derselben oder anderer Klassen enthalten. Eine solche Beziehung zwischen Objektinstanzen - nicht Klassen - wird in der Modellierung auch als Einschließungsbeziehung bzw. "containment relationship" bezeichnet.

Eine Beziehung zwischen Objektklassen, die spezifiziert, daß eine Objektinstanz einer Klasse als übergeordnetes (SUPERIOR) Objekt für Objekte einer anderen Klasse definiert ist oder definiert sein kann, wird auch als Bezeichnungsbindung bzw. "NAME BINDING" bezeichnet. Eine hierarchische Zuordnung von Objekten, in der die Hierarchie auf Grundlage von NAME-BINDING-Beziehungen organisiert ist, wird allgemein als Bezeichnungsbaum bzw. "naming tree" bezeichnet.

In einem Telekommunikationsnetz, z.B. einem Mobilfunknetz, erfolgt die Netzüberwachung und -kontrolle dabei üblicherweise von zwei Managerseiten aus: einerseits zentral von einem Betriebs- und Wartungszentrum OMC aus (OMC: Operation and Maintanance centre), was einem Element-Manager entspricht, und andererseits vor Ort von einer lokalen Wartungs-Datenendstation LMT aus (LMT: Local Maintenance Terminal), die an verschiedenen Netzeinheiten angeschlossen werden kann. Solche Netzeinheiten sind in einem Mobilfunknetz beispielsweise ein Basisstations-Untersystem BSC, eine Basisstations-Empfänger-/Senderstation BTSE (BTSE: Base Transceiver Station Equipment), die die dortige Hardware modelliert bzw. berücksichtigt, oder eine Transcoder- und Raten-Adaptereinheit TRAU.

Ein gesamtes, von einem Diensteanbieter gemanagtes Telekommunikationsnetz wird aus betrieblicher Sicht in mehrere Netzregionen unterteilt, wie dies auch aus Fig. 1 ersichtlich ist. Obwohl das gesamte Netz Hardware von verschiedenen Herstellern enthält, werden innerhalb jeder dieser Netzregionen sowohl die Netzelemente, als auch die vorstehend aufgeführten Managementsysteme üblicherweise vom gleichen Hersteller geliefert, da das Management am Betriebs- und Wartungszentrum OMC und an lokalen Wartungs-Datenendstationen alle hersteller-spezifischen Eigenschaften der Hardware berücksichtigen muß. Dazu gehören insbesondere auch die Tests der Funktionalität einzelner Komponenten.

Während der Nacht, der Feiertagen und am Wochenende wird das Mobilfunknetz einerseits von einem übergeordneten Netzmanagementzentrum überwacht, das üblicherweise als "Network Management Centre" (NMC) bezeichnet wird, da die regionalen Betriebs- und Wartungszentren OMCs zu diesen Zeiten unbesetzt sind. Anderseits muß die Schnittstelle zwischen dem Netzmanagementzentrum NMC und den regionalen Betriebs- und Wartungszentren OMCs hersteller-unabhängig bleiben, um eine funktionale Integration hersteller-spezifischer "Netzregionen unter einem einheitlichen Netzmanagementzentrum NMC zu ermöglichen.

Diese Herstellerunabhängigkeit der OMC-NMC-Schnittstelle kann in einer objekt-orientierten Managementumgebung durch die exklusive Verwendung sogenannter funktionaler Objektklassen, insbesondere Management-Objektklassen (functional-related MOC) erfolgen. Die funktionalen Objekte modellieren dabei die Netzressourcen eines Telekommunikationsnetzes aus einer funktionalen, herstellerunabhängigen Sicht. Im Gegensatz dazu kennt die hersteller-spezifische Schnittstelle zwischen Betriebs- und Wartungszentrum OMC und den Natzelementenauch sogenannte hardware-bezogene Management-Objektklassen (equipment-related MOC), die von Hersteller zu Hersteller unterschiedlich sind. Netzelemente sind dabei z.B. die Basisstationen BSS, die in einer Netzregion von einem OMC gemanaged werden.

Um auf unvorhersehbare Ereignisse, z.B. einen Ausfall von bestimmten Hardwarekomponenten, rasch reagieren zu können, muß der Operator des Netzmanagementzentrums NMC in der Lage sein, entsprechende Tests zu starten. Allerdings haben die Operatoren des Netzmanagementzentrums im Unterschied zu Operatoren der Betriebs- und Wartungszentren OMC keine systemspezifische Kenntnisse über die Hardware eines bestimmten Herstellers. Dadurch können keine hersteller-spezifischen Tests durchgeführt werden.

Das Dokument EP 0 810 755 A2 beschreibt eine "management station", welche Ereignisbenachrichtigungen ("event data") mit verschiedenen Managementprotokollen empfängt. Die "management station" führt eine Übersetzung der verschiedenen Ereignisbenachrichtigungen in eine kanonische Struktur durch und gibt diese kanonische Struktur weiter. Anstelle einer Vielzahl an Ereignisbenachrichtigungen mit jeweils unterschiedlicher Syntax empfängt der Operator somit eine einzige Ereignisbenachrichtigung, welche durch eine Korrelation der ursprünglichen verschiedenen Ereignisbenachrichtigungen einen verständlicheren und aussagekräftigeren Inhalt hat.

Die Aufgabe der Erfindung besteht darin, ein verbessertes Verfahren zum Verwalten eines Kommunikationsnetzes vorzuschlagen, insbesondere in Kommunikationsnetzen eine automatische Test-Funktionalität von einem übergeordneten, hersteller-unabhängigen Netzmanagementzentrum aus zu ermöglichen.

Diese Aufgabe wird durch das Verfahren mit den Merkmalen des Anspruchs 1 und das Funk-Kommunikationssystem mit den Merkmalen des Anspruchs 7, sowie durch eine Einrichtung mit den Merkmalen des Anspruchs 6 gelöst. Vorteilhafte Weiterbildungen sind Gegenstand von Unteransprüchen. In dem Verfahren zum Betreiben eines Managementnetzes existiert eine erste Einrichtung einer ersten Managementschicht, eine zweite Einrichtung einer zweiten Managementschicht, und eine dritte Einrichtung einer dritten Managementschicht. Für die Kommunikation über eine erste Schnittstelle zwischen der ersten Einrichtung und der zweiten Einrichtung wird ein erstes Informations-Modell mit funktionalen Management-Objektklassen verwendet, und für die Kommunikation über eine zweite Schnittstelle zwischen der zweiten Einrichtung und der dritten Einrichtung ein zweites Informations-Modell mit hardware-bezogenen Management-Objektklassen. Erfindungsgemäß sendet die erste Einrichtung über die erste Schnittstelle eine Nachricht an die zweite Einrichtung mit einer Aufforderung zu einem Hardware-Test bezüglich der dritten Einrichtung.

Der Konflikt zwischen der Handhabung von einerseits hersteller-unabhängigen funktionalen Management-Objektklassen und andererseits hersteller-spezifischen, hardware-bezogenen Management-Objektklassen kann somit dadurch gelöst werden, daß am Netzmanagementzentrum hersteller-spezifische Hardware-Tests automatisch erzeugt werden. Dies erfolgt vorzugsweise sowohl gezielt, d.h. nach Empfang von Alarmen als Folge von Hardwarefehlern, als auch generisch, d.h. als periodische präventive Maßnahme.

Somit ist die automatische Erzeugung von hersteller-spezifischen Hardwaretests von einem Netzmanagementzentrum NMC aus möglich, obwohl das Informations-Modell der OMC-NMC-Schnittstelle keine hersteller-spezifische Objektklassen kennt.

Die am Netzmanagementzentrum NMC automatisch generierten Tests können sowohl dediziert, also z.B. nach dem Auftreten von Fehlern eines bestimmten Hardware-Board, als auch präventiv, z.B. für die gesamte Hardware einer Netzeinheit, getriggert werden.

Nachfolgend wird ein Ausführungsbeispiel anhand der Zeichnung näher erläutert. Es zeigen:
- Fig. 1: ein übliches, in mehrere Netzregionen unterteiltes Kommunikationsnetz,
- Fig. 2: schematisch den Ablauf einer Alarmübertragungsprozedur in einem solchen Kommunikationsnetz und
- Fig. 3: schematisch den Ablauf hersteller-spezifischer Tests in einem solchen Kommunikationsnetz.

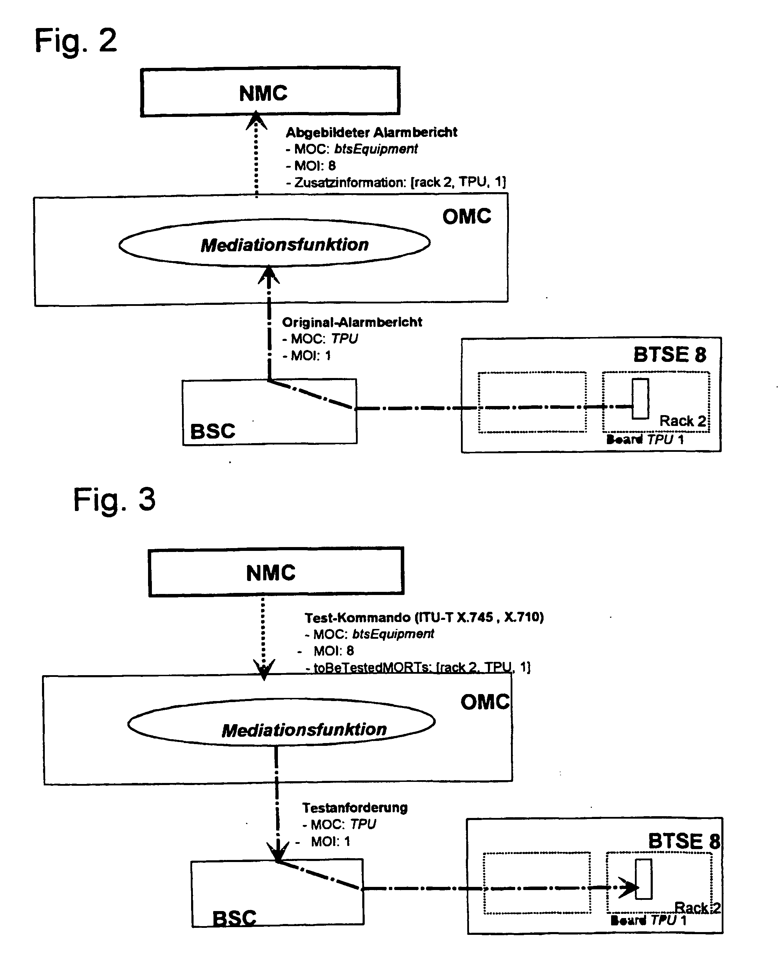

Beispielhafte Verfahrensabläufe zum hardware-spezifischen Testen von Netzeinrichtungen vom Netzmanagementzentrum NMC aus sind in den Fig. 2 und 3 dargestellt.

Zur Steuerung der Schnittstellen zwischen Netzmanagementzentrum NMC und den regionalen Betriebs- und Wartungszentren OMCs gibt es verschiedene Management-Objektklassen MOCs. Da diese Schnittstellen hersteller-unabhängig sein müssen, enthält das Informations-Modell einer solchen Management-Schnittstelle nur funktionale Management-Objektklassen MOCs.

Um in diesem Informations-Modell eine hersteller-spezifische Hardware zu integrieren, werden vorzugsweise die gesamten Hardware-Baugruppen, d.h. alle sogenannten Boards, auf der Ebene einer Netzeinheit als eine generische Gesamtausstattungs-Management-Objektklasse MOC (equipment summary MOC) definiert.

Zum Beispiel werden für den Radioteil eines Mobilfunk-Netzes, das aus den Netzeinheiten Basisstations-Steuereinrichtung BSC, Basisstations-Empfänger-/Senderstation BTSE und Transcoder- und Raten-Adaptereinheit TRAU besteht, folgende Gesamtausstattungs-Management-Objektklassen MOC definiert:
bscEquipment
btsEquipment
trauEquipment.

Die Management-Objektklasse bscEquipment betrifft die Ausstattungsmerkmale der Basisstations-Steuereinrichtung, btsEquipment betrifft die Ausstattungsmerkmale der Basisstations-Empfänger-/Senderstation und trauEquipment betrifft die Ausstattungsmerkmale der Transcoder- und Raten-Adaptereinheit.

Beim Auftreten eines Hardwarefehlers in einer spezifischen Hardware-Baugruppe, z.B. bei Fig. 2 in einem Board 1 vom Typ TPU (TPU: Transceiver Power Unit), wobei dies nur als ein Beispiel eines Hardware-Boards zu sehen ist, in Gestell- bzw. Rack-Nr. 2 der BTSE-Einheit 8, generiert diese Netzeinheit eine Alarm-Notification bzw. Alarm-Benachrichtigung mit den Parametern:
- Objektklasse MOC: TPU (hardware-bezogene MOC an der hersteller-spezifischen OMC-BSS-Schnittstelle) und
- Objektinstanz MOI: ...-8-2-1 (Folge von relativ unterscheidbaren Namen, sogenannten Relative Distinguished Names, gemäß dem Bezeichnungsbaum).

Diese Benachrichtigung wird als hersteller-spezifische Alarmmeldung (alarm report) über die Netzeinheit Basisstations-Steuereinrichtung BSC an das regionale Betriebs- und Wartungszentrum OMC weitergeleitet.

Um die Netzüberwachung an einem übergeordneten Netzmanagementzentrum NMC während der Zeit mit unbesetzten Betriebs- und Wartungszentren OMCs zu ermöglichen, erhält jedes hersteller-spezifische Betriebs- und Wartungszentrum OMC eine sogenannte Mediationsfunktion. Die Mediationsfunktion wandelt alle für das Netzmanagementzentrum NMC relevanten Ereignismeldungen (event reports) aus dem Telekommunikationsnetz auf die jeweils entsprechende funktionale Management-Objektklasse um, und zwar gemäß dem Informations-Modell der OMC-NMC-Schnittstelle. Diese Vorgehensweise wird auch als sogenannte Abbildungs- bzw. Mapping-Prozedur bezeichnet und ist in Fig. 2 skizziert.

Mit anderen Worten, Alarmmeldungen nach Hardware-Fehlern, d.h. hardware-bezogene, hersteller-spezifische Alarme, werden von der Mediationsfunktion in Alarme von funktionalen, Gesamtausstattungs-Managementobjekten umgewandelt und anschließend in Form von hersteller-unabhängigen Alarmberichten an das Netzmanagementzentrum NMC weitergeleitet. Die ursprüngliche hardware-bezogene Alarmmeldung wird gemäß ITU-T X.733 ("Systems Management: Alarm Reporting Function") in eine funktionale, standardisierte Alarmmeldung mit z.B. folgenden Parametern "gemapped" bzw. abgebildet:
- Objektklasse: btsEquipment (modelliert die Funktionalität der Hardware in einer Netzeinheit BTSE)
- Objektinstanz: ...-8.

Hinsichtlich der Objektinstanz gibt es an der OMC-NMC-Schnittstelle eine 1:1-Zuordnung zwischen den tatsächlichen Netzeinheiten BTSE und den funktionalen, generischen Instanzen der Objektklasse btsEquipment.

Beim in Fig. 2 dargestellten Beispiel wird die zum Betriebs- und Wartungszentrum OMC übertragene ursprüngliche Alarmmeldung mit "MOC = TPU" und "MOI = 1" auf eine abgebildete Alarmmeldung mit den Informationen "MOC = btsEquipment", "MOI = 8" und "Zusatzinformation (standardisierter Parameter "Additional information")= [rack 2, TPU 1]" abgebildet.

Die hersteller-spezifische Information, die die ursprüngliche fehlerhafte Hardware eindeutig kennzeichnet, wird von der Mediationsfunktion somit im Feld Zusatzinformation definiert. Die Zusatzinformation der an das Netzmanagementzentrum NMC gesendeten Alarmmeldung ist beim vorliegenden Beispiel gemäß dem Standard ITU-T X.710 "Open Systems Interconnection - Common Management Information Service Definition" wie folgt definiert:
- Rack-Nummer: 2, weil die BTSE-Hardware hier in mehreren Racks untergebracht ist,
- Board-Typ: TPU und
- Board-Nummer: 1.

Nach dem Empfang des mediierten Alarmberichts erkennt die NMC-Software des Netzmanagementzentrums NMC anhand der Objektklasse ("equipment-summary" btsEquipment), daß es sich hier um einen hersteller-spezifischen Hardwarefehler handelt.

Um den Fehler näher zu untersuchen, d.h. festzustellen, ob es ein transienter oder ein permanenter Fehler ist, ob das Board ersetzt werden soll etc., muß das Netzmanagementzentrum NMC einen für das aktuelle Board (TPU) spezifischen Test starten. Dies sollte vorzugsweise automatisch erfolgen. Dafür wertet die NMC-Software das Feld "Zusatzinformation" aus und kann, zusammen mit der Objektklasse und -instanz der mediierten Alarmmeldung, die Adresse des fehlerhaften Board eindeutig bestimmen und nachbilden.

Damit generiert das Netzmanagementzentrum NMC, wie in Fig. 3 skizziert, eine gemäß ITU-T X.745 (Systems Management: Test Management Function) standardisierte Managementaktion "M-ACTION", in der die zu testende Hardware mit Hilfe der sogenannten "nonSpecificForm" definiert ist. Parameter ist dabei das Feld "toBeTestedMORTs" bzw. zu testende Boards. Beim vorliegenden Beispiel definiert das 1. Byte die Gestell- bzw. Rack-Nummer, in dem sich das zu testende Board bzw. eine zu testende Leiterplatte befindet. Das 2. Byte definiert den Board-Typ, d.h. im vorliegenden Beispiel TPU und das 3. Byte definiert die Leiterplatten- bzw. Board-Nummer, hier 1.

Die Managementaktion M-ACTION wird von dem Netzmanagementzentrum NMC über die Schnittstelle an das Betriebs- und Wartungszentrum OMC gesendet, wobei der Empfänger immer ein Managementobjekt vom Gesamtausstattungstyp ("equipment-summary" object) ist. Dies ist im vorliegenden Fall die btsEquipment-Instanz 8.

Im Betriebs- und Wartungszentrum OMC wandelt die Mediationsfunktion diese Managementaktionsanforderung (M-ACTION Request) in eine Test-Anforderung gemäß dem hersteller-spezifischen Informations-Modell der OMC-BSS-Schnittstelle um. Anhand der 1:1-Zuordnung zwischen der realen Basisstations-Empfänger-/Senderstations-Einrichtung BTSE und der Gesamtausstattungs-Instanz btsEquipment und dem Parameterwert "toBeTestedMORTs", kann die Mediationsfunktion die Adresse des zu testenden Boards im realen Telekommunikationsnetz eindeutig definieren. Die Test-Anforderung enthält dabei vorteilhafterweise auch die Kennung des für das aktuelle Board vordefinierten, hersteller-spezifischen Tests.

Die von der Netzeinheit, hier BTSE 8, zurückgesendeten Testergebnisse werden von der Mediationsfunktion im Betriebs- und Wartungszentrum OMC wiederum gemäß dem Informations-Modell der OMC-NMC-Schnittstelle umgewandelt und mit der vorherigen NMC-Test-Anforderung des Netzmanagementzentrums NMC mit Hilfe des standardisierten Parameters "Testaufruf-ID" bzw. "testInvocationId" eindeutig korreliert. Dabei sendet das OMC nach dem standardisierten NMC-Testkommando eine "Response", die den Parameterwert "testInvocationId" enthält, damit ein Testvorgang eindeutig gekennzeichnet ist. Der gleiche Wert wird vom Betriebs- und Wartungszentrum OMC nach Testende in die testResultNotification für das Netzmanagementzentrum NMC eingefügt.

Die abgebildeten bzw. mediierten Testergebnisse können von der NMC-Software auch zur automatischen Erstellung von sogenannten Fehlerformularen bzw. "Trouble tickets" verwendet werden, damit entsprechende Reparaturmaßnahmen vor Ort eingeleitet werden können.

Die Definition der OMC-NMC-Schnittstelle ermöglicht zusätzlich und/oder alternativ auch die automatische Generierung von periodischen, präventiven Hardware-Tests an dem Netzmanagementzentrum NMC. In der gemäß ITU-T X.745 standardisierten Test-Anforderung kann das Netzmanagementzentrum NMC einen speziellen Wert für das zu testende Board im Attribut "toBeTestedMORTs" verwenden. Die Mediationsfunktion kann dieses Kommando z.B. als Test-Anforderung für jene gesamte Netzeinheit interpretieren, die vom Empfänger der Test-Anforderung modelliert wird. Im vorliegenden Beispiel ist dies die btsEquipment-Instanz 8. Demzufolge erzeugt die Mediationsfunktion mehrere einzelne, für jedes Hardware-Board spezifische Testkommandos, die an die Netzeinheit BTSE 8 hintereinander gesendet werden.

Nach jedem Test werden die einzelnen Testergebnisse von der Mediationsfunktion gesammelt, "gemapped" und als eine gemäß ITU-T X.745 standardisierte Testergebnisse-Benachrichtigung bzw. sogenannte "testResultNotification" an das übergeordnete Netzmanagementzentrum NMC übertragen.

## Patentansprüche

1. Verfahren zum Betreiben eines Managementnetzes,
mit einer ersten Einrichtung (NMC) einer ersten Managementschicht, einer zweiten Einrichtung (OMC) einer zweiten Managementschicht, und einer dritten Einrichtung (BTSE, BSC) einer dritten Managementschicht,
**dadurch gekennzeichnet,**
**dass** für die Kommunikation über eine erste Schnittstelle zwischen der ersten Einrichtung (NMC) und der zweiten Einrichtung (OMC) ein erstes Informations-Modell mit funktionalen Management-Objektklassen und für die Kommunikation über eine zweite Schnittstelle zwischen der zweiten Einrichtung (OMC) und der dritten Einrichtung (BTSE, BSC) ein zweites Informations-Modell mit hardware-bezogenen Management-Objektklassen verwendet wird, und
**dass** die erste Einrichtung (NMC) über die erste Schnittstelle eine Nachricht an die zweite Einrichtung (OMC) sendet mit einer Aufforderung zu einem Hardware-Test bezüglich der dritten Einrichtung (BTSE, BSC).

2. Verfahren nach Anspruch 1, bei dem
die Nachricht zyklisch und/oder nach einem Fehler in der dritten Einrichtung (BTSE, BSC) gesendet wird.

3. Verfahren nach Anspruch 1 oder 2, bei dem
nach der Versendung der Nachricht durch die erste Einrichtung (NMC) eine zweite Nachricht mit hardware-bezogener Information über den Zustand der dritten Einrichtung (BTSE, BSC) von der zweiten Einrichtung (OMC) an die erste Einrichtung (NMC) gesendet wird.

4. Verfahren nach einem der Ansprüche 1 bis 3, bei dem aufgrund der Übermittlung der Nachricht der Zustand der dritten Einrichtung (BTSE, BSC) überprüft oder abgefragt wird.

5. Verfahren nach einem der Ansprüche 1 bis 4, bei dem aufgrund der Übermittlung der Nachricht herstellerspezifische Tests der dritten Einrichtung (BTSE, BSC) aktiviert werden.

6. Einrichtung (NMC) für eine erste Schicht eines Managementnetzes, mit
einer Schnittstelle zu einer zweiten Einrichtung (OMC) einer zweiten Schicht des Managementnetzes, **gekennzeichnet dadurch, dass** die Schnittstelle ein Informations-Modell mit funktionalen Management-Objektklassen für die Kommunikation beinhaltet, und durch Mittel zum Versenden einer Nachricht an die zweite Einrichtung (OMC) mit einer Aufforderung zu einem Hardware-Test bezüglich einer dritten Einrichtung (BTSE, BSC) einer dritten Managementschicht, wobei die dritte Einrichtung (BTSE, BSC) über eine weitere Schnittstelle mit der zweiten Einrichtung (OMC) verbunden ist, wobei die weitere Schnittstelle ein Informations-Modell mit hardware-bezogenen Management-Objektklassen für die Kommunikation beinhaltet.

7. Kommunikationssystem,
mit einer ersten Einrichtung (NMC) einer ersten Managementschicht, einer zweiten Einrichtung (OMC) einer zweiten Managementschicht, und einer dritten Einrichtung (BTSE, BSC) einer dritten Managementschicht,
**gekennzeichnet durch**
eine erste Schnittstelle zwischen der ersten Einrichtung (NMC) und der zweiten Einrichtung (OMC), wobei die erste Schnittstelle ein erstes Informations-Modell mit funktionalen Management-Objektklassen für die Kommunikation beinhaltet, und
eine zweite Schnittstelle zwischen der zweiten Einrichtung (OMC) und der dritten Einrichtung (BTSE, BSC), wobei die zweite Schnittstelle ein zweites Informations-Modell mit hardware-bezogenen Management-Objektklassen für die Kommunikation beinhaltet, und
Mittel der ersten Einrichtung (NMC) zur Versendung einer Nachricht über die erste Schnittstelle mit einer Aufforderung zu einem Hardware-Test bezüglich der dritten Einrichtung (BTSE, BSC).

8. Kommunikationssystem nach Anspruch 7, bei dem
die erste Einrichtung (NMC) ein Netzmanagementzentrum und die zweite Einrichtung (OMC) ein Betriebs- und Wartungszentrum ist.

## Claims

1. Method for operating a management network, having a first device (NMC) of a first management layer, a second device (OMC) of a second management layer, and a third device (BTSE, BSC) of a third management layer, **characterized in that** a first information model with functional management object classes is used for the communication between the first device (NMC) and the second device (OMC) via a first interface, and a second information model with hardware-related management object classes is used for the communication via a second interface between the second device (OMC) and third device (BTSE, BSC), and **in that** the first device (NMC) transmits a message via the first interface to the second device (OMC) with a request for a hardware test with respect to the third device (BTSE, BSC).

2. Method according to Claim 1, in which the message is transmitted cyclically and/or after a fault in the third device (BTSE, BSC).

3. Method according to Claim 1 or 2, in which, after the transmission of the message by the first device (NMC) a second message with hardware-related information relating to the state of the third device (BTSE, BSC) is transmitted from the second device (OMC) to the first device (NMC).

4. Method according to one of Claims 1 to 3, in which the state of the third device (BTSE, BSC) is checked or interrogated on the basis of the transmission of the message.

5. Method according to one of Claims 1 to 4, in which manufacturer-specific tests of the third device (BTSE, BSC) are activated on the basis of the transmission of the message.

6. Device (NMC) for a first layer of a management network, having an interface with a second device (OMC) of a second layer of the management network, **characterized in that** the interface contains an information model with functional management object classes for the communication, and by means for transmitting a message to the second device (OMC) with a request for a hardware test with respect to a third device (BTSE, BSC) of a third management layer, wherein the third device (BTSE, BSC) is connected via a further interface to the second device (OMC), wherein the further interface contains an information model with hardware-related management object classes for the communication.

7. Communication system,
having a first device (NMC) of a first management layer, a second device (OMC) of a second management layer, and a third device (BTSE, BSC) of a third management layer, **characterized by** a first interface between the first device (NMC) and the second device (OMC), wherein the first interface contains a first information model with functional management object classes for the communication, and a second interface between the second device (OMC) and the third device (BTSE, BSC), wherein the second interface contains a second information model with hardware-related management object classes for the communication, and
means of the first device (NMC) for transmitting a message via the first interface with a request for a hardware test with respect to the third device (BTSE, BSC).

8. Communication system according to Claim 7, in which the first device (NMC) is a network management centre and the second device (OMC) is an operations and maintenance centre.

## Revendications

1. Procédé pour l'exploitation d'un réseau de gestion, comprenant un premier dispositif (NMC) d'une première couche de gestion, un second dispositif (OMC) d'une seconde couche de gestion, et un troisième dispositif (BTSE, BSC) d'une troisième couche de gestion,
**caractérisé en ce que**,
pour la communication au moyen d'une première interface entre le premier dispositif (NMC) et le second dispositif (OMC), on utilise un premier modèle d'information avec des classes d'objet de gestion fonctionnelles et pour la communication au moyen d'une seconde interface entre le second dispositif (OMC) et le troisième dispositif (BTSE, BSC) un second modèle d'information avec des classes d'objet de gestion spécifiques au matériel, et
**en ce que** le premier dispositif (NMC) envoie par l'intermédiaire de la première interface un message au second dispositif (OMC) avec une demande d'un test de matériel concernant le troisième dispositif (BTSE, BSC).

2. Procédé selon la revendication 1, dans lequel
le message est envoyé de façon cyclique et/ou après un défaut dans le troisième dispositif (BTSE, BSC).

3. Procédé selon la revendication 1 ou 2, dans lequel
après l'envoi du message par le premier dispositif (NMC), un second message avec une information spécifique au matériel sur l'état du troisième dispositif (BTSE, BSC) est envoyé par le second dispositif (OMC) au premier dispositif (NMC).

4. Procédé selon l'une quelconque des revendications 1 à 3,
dans lequel, sur la base de la transmission du message, l'état du troisième dispositif (BTSE, BSC) est contrôlé ou interrogé.

5. Procédé selon l'une quelconque des revendications 1 à 4,
dans lequel sur la base de la transmission du message, des tests spécifiques au constructeur du troisième dispositif (BTSE, BSC) sont activés.

6. Dispositif (NMC) pour une première couche d'un réseau de gestion,
avec une interface pour un second dispositif (OMC) d'une seconde couche du réseau de gestion, **caractérisé en ce que** l'interface contient un modèle d'information avec des classes d'objet de gestion fonctionnelles pour la communication et par des moyens pour l'envoi d'un message au second dispositif (OMC) avec une demande pour un test de matériel concernant un troisième dispositif (BTSE, BSC) d'une troisième couche de gestion, le troisième dispositif (BTSE, BSC) étant relié au moyen d'une autre interface au second dispositif (OMC), l'autre interface contenant un modèle d'information avec des classes d'objet de gestion spécifiques au matériel pour la communication.

7. Système de communication,
comprenant un premier dispositif (NMC) d'une première couche de gestion, un second dispositif (OMC) d'une seconde couche de gestion, et un troisième dispositif (BTSE, BSC) d'une troisième couche de gestion,
**caractérisé par**
une première interface entre le premier dispositif (NMC) et le second dispositif (OMC), la première interface contenant un premier modèle d'information avec des classes d'objet de gestion fonctionnelles pour la communication et une seconde interface entre le second dispositif (OMC) et le troisième dispositif (BTSE, BSC), la seconde interface contenant un second modèle d'information avec des classes d'objet de gestion spécifiques au matériel pour la communication, et
des moyens du premier dispositif (NMC) pour l'envoi d'un message via la première interface avec une demande pour un test de matériel concernant le troisième dispositif (BTSE, BSC).

8. Système de communication selon la revendication 7, dans lequel
le premier dispositif (NMC) est un centre de gestion de réseau et le second dispositif (OMC) un centre d'exploitation et de maintenance.
